# EUROPÄISCHE PATENTSCHRIFT

(11) **EP 1 275 541 B1**
(45) Veröffentlichungstag und Bekanntmachung des Hinweises auf die Patenterteilung: **30.08.2006**
(21) Anmeldenummer: 02013529.9
(22) Anmeldetag: 18.06.2002
(51) Int. Cl.: B60J 7/047

(54) **Modul, insbesondere Schiebedachmodul für ein Fahrzeug**
Module, specially a sliding roof module for a vehicle
Module, spécialement module coulissant pour véhicule

(30) Priorität: 10.07.2001 DE 10133436
(43) Veröffentlichungstag der Anmeldung: 15.01.2003
(73) Patentinhaber: ArvinMeritor GmbH, 63128 Dietzenbach (DE)
(72) Erfinder: Stallfort, Klaus, 61273 Wehrheim (DE); Arnold, Rainer, 63679 Schotten (DE); Schnabel, Margit, 63667 Nidda (DE)
(74) Vertreter: Sties, Jochen

(56) Entgegenhaltungen:
- DE-A- 3 715 268
- DE-C- 3 735 686
- DE-C- 19 713 348
- DE-C- 19 953 104

## Beschreibung

Die Erfindung betrifft ein Modul, insbesondere ein Schiebedachmodul für ein Fahrzeug, mit mindestens einer Führung, mindestens zwei Schlitten, die in der Führung verschiebbar sind und an denen jeweils ein zu betätigendes Bauteil angebracht ist, und mindestens einem Mitnehmer, der mit einem Antriebsmittel verbunden ist, so daß er in der Führung verstellt werden kann. Ein Schiebedachmodul dieses Art ist z.B. in DE 19713348C offenbart.

Wenn ein solches Modul ein Schiebedachmodul für ein Fahrzeug ist, kann an jedem der Schlitten ein Deckelteil eines Schiebedachs mit zwei oder mehr Deckelteilen angebracht sein. Die Deckelteile sollen unabhängig voneinander einstellbar und bewegbar sein, so daß verschiedene Zustände möglich sind. Beispielsweise ist es wünschenswert, eines der Deckelteile aus einer geschlossenen Stellung in eine sogenannte Lüfterstellung zu bringen, in der das Deckelteil schräg angestellt ist, so daß sein in Fahrtrichtung des Fahrzeugs gesehen hinterer Rand angehoben ist. Weiterhin kann es wünschenswert sein, ein anderes Deckelteil, während sich das eine Deckelteil in der Lüfterstellung befindet, aus seiner geschlossenen Stellung über eine Lüfterstellung in eine geöffnete Stellung zu verfahren.

Um zwei Deckelteile unabhängig voneinander zu betätigen, ist im Stand der Technik ein Antriebsmittel je Schlitten vorgesehen. Das Antriebsmittel kann beispielsweise ein drucksteif geführtes und damit schubfestes Kabel sein, das mit dem entsprechenden Schlitten verbunden ist und von einem Antriebsmotor geeignet verstellt wird. Nachteilig an dieser Konstruktion sind der hohe Bauaufwand und die hohen Kosten, insbesondere für die mehreren Antriebsmotoren.

Die Aufgabe der Erfindung besteht daher darin, ein Modul der eingangs genannten Art dahingehend weiterzubilden, daß mit geringerem Aufwand und bei geringeren Kosten mindestens zwei Schlitten durch ein einziges Antriebsmittel verstellt werden können.

Zu diesem Zweck ist gemäß der Erfindung vorgesehen, daß der Mitnehmer und mindestens einer der Schlitten so ausgebildet sind, daß der Mitnehmer an dem einen Schlitten angekoppelt werden und ihn verstellen kann und nach einer vorbestimmten Verstellung des Schlittens wieder von diesem gelöst werden kann. Diese Konstruktion beruht auf dem Grundgedanken, daß mit einem einzigen Antriebsmittel die Betätigung mehrerer Schlitten dadurch ermöglicht wird, daß ein an geeigneter Stelle fest mit dem Antriebsmittel verbundener Mitnehmer bei einer geeigneten Stellung des Antriebsmittels an einen Schlitten angekoppelt wird, diesen bei weiterer Verstellung des Antriebsmittels mitnimmt und danach wieder vom Schlitten abgekoppelt wird. Wenn dann das Antriebsmittel weiter verstellt wird, kann ein anderer Mitnehmer an den entsprechenden Schlitten oder auch einen anderen Schlitten angekoppelt und wieder von diesem abgekoppelt werden. Durch geeignete Anordnung der Mitnehmer auf dem Antriebsmittel werden bestimmte Bereiche des Verstellweges des Antriebsmittels definiert, in denen es zu einem Zusammenwirken mit einem der Schlitten kommt. Auf diese Weise können mit einem einzigen Antriebsmittel je Führung und einem einzigen Antriebsmotor für dieses Antriebsmittel mehrere Schlitten nacheinander oder auch gleichzeitig verstellt werden.

Es sei an dieser Stelle darauf hingewiesen, daß ein Modul selbstverständlich auch zwei einander gegenüberliegende Führungen aufiveisen kann, die sich beispielsweise entlang den Seitenrändern einer Dachöffnung erstrecken und die jeweils mehrere Schlitten aufweisen. Weiterhin sei darauf hingewiesen, daß unter dem Begriff "Ankoppeln" nicht das bloße Anliegen des Mitnehmers an einem Schlitten zu verstehen ist, sondern eine Verbindung mit dem Schlitten derart, daß sowohl Zug- als auch Schubkräfte übertragen werden können.

Vorteilhafte Ausgestaltungen der Erfindung ergeben sich aus den Unteransprüchen.

Die Erfindung wird nachfolgend anhand eines Ausführungsbeispiels beschrieben, das in den beigefügten Zeichnungen dargestellt ist. In diesen zeigen:
- Figur 1 in einer schematischen, perspektivischen Ansicht ei n Fahrzeugdach mit Schiebedachmodul;
- Figur 2 in einer schematischen, perspektivischen Ansicht einen Schnitt entlang der Ebene II-II von Figur 1, wobei insbesondere eine Führungsschiene des Schiebedachmoduls zu sehen ist;
- Figur 3 eine Ansicht entsprechend derjenigen von Figur 2, wobei Teile der Führungsschiene weggelassen sind, um innenliegende Bauteile zu zeigen;
- Figur 4 eine Ansicht entsprechend derjenigen von Figur 2, wobei eine Hälfte der Führungsschiene weggelassen wurde, um innenliegende Bauteile zu zeigen;
- Figur 5 eine Ansicht entsprechend derjenigen von Figur 2, wobei weitere Bauteile entfernt wurden, um andere Bauteile zu zeigen;
- die Figuren 6a und 6b Schnittansichten der Führungsschiene von Figur 2 entlang den Ebenen a und b von Figur 2, wobei zwei Deckelteile des Schiebedachmoduls in der geschlossenen Stellung gezeigt sind;
- die Figuren 7a und 7b Schnittansichten der Führungsschiene von Figur 2 entlang den Ebenen a und b von Figur 2, wobei das hintere Deckelteil in der Lüfterstellung gezeigt ist;
- in die Figuren 8a und 8b Schnittansichten der Führungsschiene von Figur 2 entlang den Ebenen a und b von Figur 2, wobei das vordere und das hintere Deckelteil in der Lüfterstellung gezeigt sind;
- die Figuren 9a und 9b Schnittansichten der Führungsschiene von Figur 2 entlang den Ebenen a und b von Figur 2, wobei das hintere Deckelteil in der Lüfterstellung und das vordere Deckelteil in einer an das hintere Deckelteil angenäherten Stellung gezeigt sind; und
- die Figuren 10a und 10b Schnittansichten der Führungsschiene von Figur 2 entlang den Ebenen a und b von Figur 2, wobei die beiden Deckelteile in einer geöffneten Stellung gezeigt sind.

Obwohl das in den Zeichnungen dargestellte Ausführungsbeispiel ein Schiebedachmodul mit zwei Deckelteilen ist, kann die erfindungsgemäße Konstruktion auch zur Betätigung von anderen bewegbaren Teilen verwendet werden, beispielsweise zur Betätigung eines Sonnenschutzes, eines Rollos oder eines Windabweisers zusätzlich zur Verstellung von Deckelteilen. Auch können mehr als zwei Deckelteile betätigt werden.

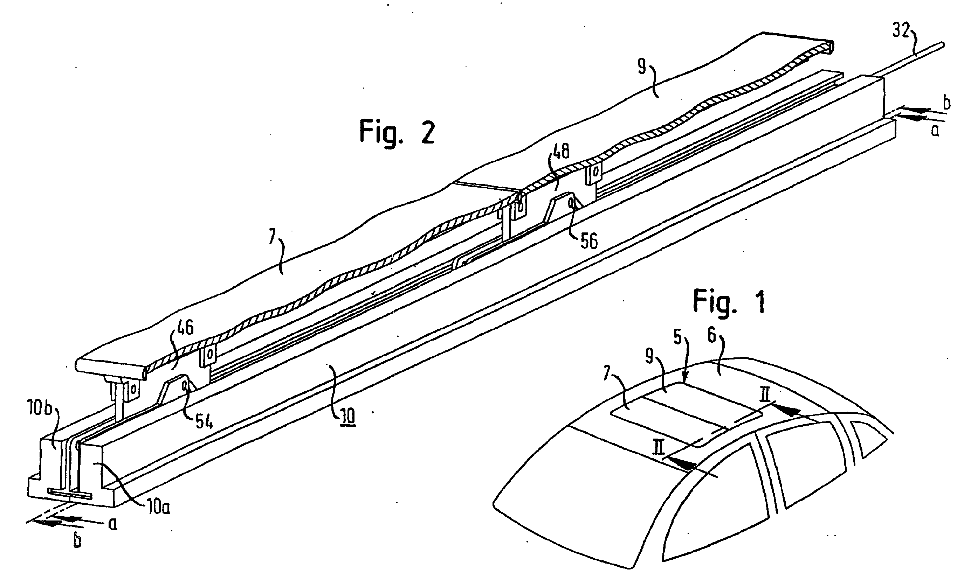

Das in Figur 1 gezeigte Schiebedachmodul 5 ist an einem Fahrzeugdach 6 eines Fahrzeugs angebracht und weist ein erstes Deckelteil 7 und ein zweites Deckelteil 9 auf, die aus einer geschlossenen, in Figur 1 gezeigten Stellung in eine geöffnete Stellung verstellt werden können, in der sie eine Dachöffnung des Fahrzeugdachs freigeben. Die beiden Deckelteile 7, 9 sind in zwei Führungen geführt, die hier jeweils als Führungsschiene 10 ausgebildet sind. Es erstreckt sich je eine Führungsschiene entlang den Seitenrändern der Dachöffnung des Fahrzeugs.

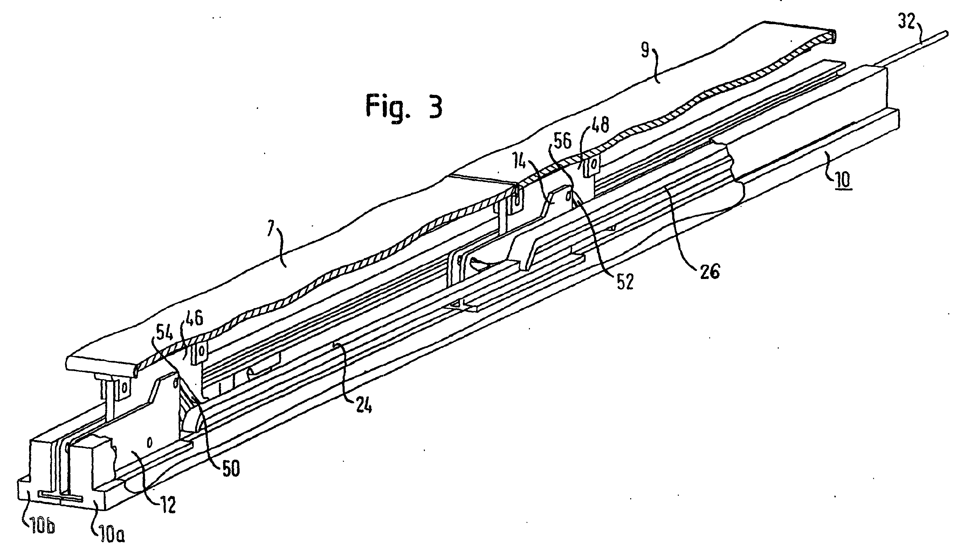

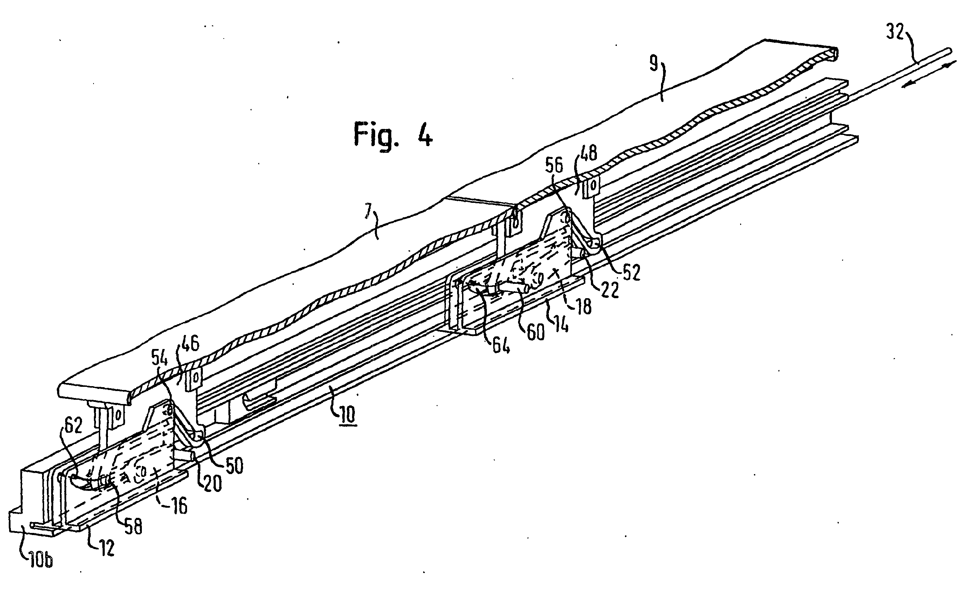

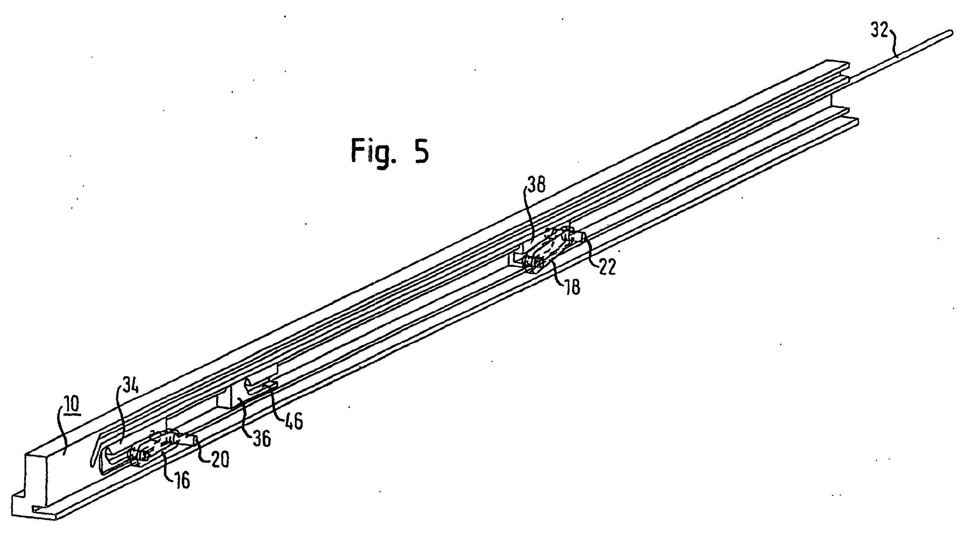

Jede Führungsschiene weist zwei Teile 10a 10b auf, von denen eines zur Dachöffnung des Fahrzeugs gerichtet ist und das andere zur Außenseite des Fahrzeugs. In der Führungsschiene sind ein erster Schlitten 12 und ein zweiter Schlitten 14 verschiebbar aufgenommen (Figur 3). Jeder der Schlitten ist mit einem Riegel 16 bzw. 18 versehen (Figur 4), die jeweils an einem Ende schwenkbar am entsprechenden Schlitten 12 bzw. 14 angebracht sind und am anderen Ende mit einem Koppelelement in der Form eines Koppelbolzens 20 bzw. 22 versehen sind. Jeder Koppelbolzen 20, 22 steht seitlich über den entsprechenden Riegel 16, 18 hinaus (siehe insbesondere die Figuren 4 und 5), so daß sie mit einer Verriegelungskurvenfläche 24 bzw. 26 (Figur 3) zusammenwirken können. Die dem ersten Riegel 16 und dem ersten Koppelbolzen 20 zugeordnete erste Verriegelungskurvenfläche 24 ist durch die Oberseite einer Führungsbahn gebildet, die im bezüglich der Figuren vorderen Teil 10a der Führungsschiene 10 angeordnet ist, und die dem zweiten Riegel 18 und dem zweiten Koppelbolzen 22 zugeordnete Verriegelungskurvenfläche 26 ist als Führungsbahn in dem bezüglich der Figuren hinterem Teil 10b der Führungsschiene 10 angeordnet.

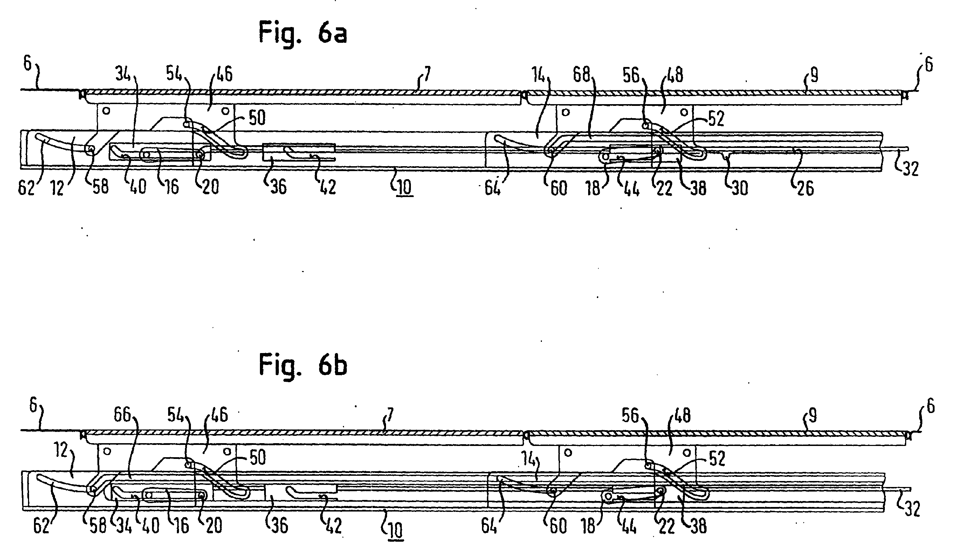

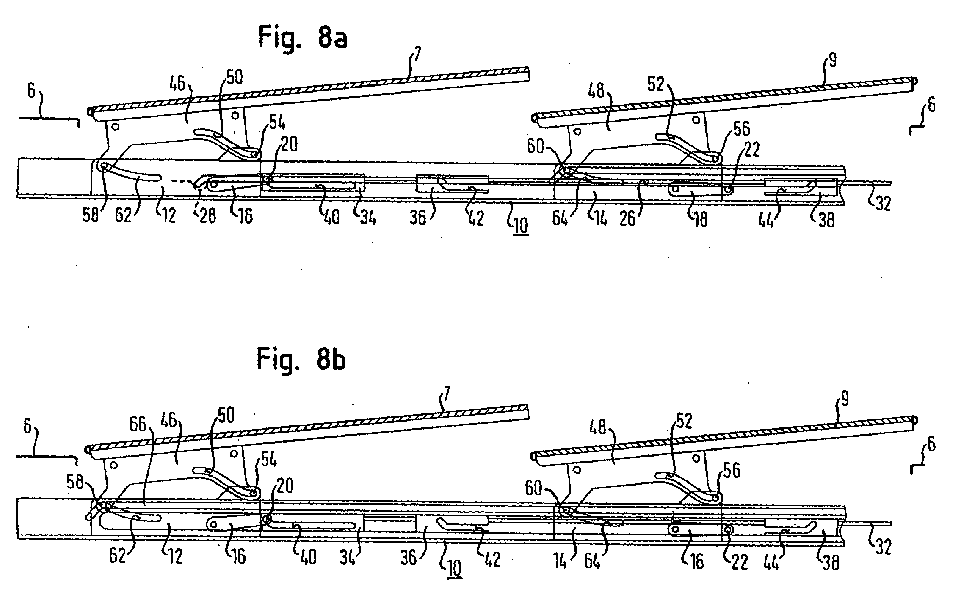

In dem vorderen Teil 10a der Führungsschiene 10 ist eine Aussparung 28 (siehe Figur 8a) vorgesehen, in die der Koppelbolzen 20 des ersten Riegels 16 eingreifen kann, um den mit dem ersten Riegel 16 verbundenen ersten Schlitten 12 relativ zur Führungsschiene zu arretieren. Das zweite Teil 10b der Führungsschiene ist mit einer Aussparung 30 (siehe Figur 6a) versehen, in die der Koppelbolzen 22 des zweiten Riegels 18 eingreifen kann, um den mit dem zweiten Riegel verbundenen zweiten Schlitten 14 relativ zur Führungsschiene zu arretieren.

In der Führungsschiene ist ein Antriebsmittel in der Form eines schubfesten Kabels 32 angeordnet, das von einem externen (nicht dargestellten) Antriebsmotor in der Längsrichtung des Kabels verstellt werden kann. Mit dem Kabel sind fest ein erster Mitnehmer 34, ein zweiter Mitnehmer 36 und ein dritter Mitnehmer 38 verbunden, die verschiebbar in der Führungsschiene 10 angeordnet sind. Die Mitnehmer 34, 36, 38 sind in untereinander festen Abständen am Kabel 32 befestigt. Der erste Mitnehmer 34 weist eine Koppelkurvenfläche auf, die hier als geschlossener Schlitz 40 ausgebildet ist (Figur 6a ff.). In den Schlitz 40 greift der Koppelbolzen 20 des ersten Riegels 16 ein. Der Schlitz 40 weist einen geraden, sich parallel zur Verschieberichtung des ersten Mitnehmers 34 erstreckenden Abschnitt auf sowie einen gekrümmten Abschnitt, der am bezüglich der Figuren linken Ende des Schlitzes angeordnet ist und sich von dem geraden Abschnitt aus nach oben erstreckt. Der zweite Mitnehmer 36 weist in ähnlicher Weise einen Schlitz 42 auf, der jedoch am rechten Ende geöffnet ist. Auch der Schlitz 42 des zweiten Mitnehmers weist am linken Ende einen nach oben gekrümmten Abschnitt auf. Der dritte Mitnehmer 38 weist einen Schlitz 44 auf, der spiegelbildlich zum Schlitz 42 des zweiten Mitnehmers ausgeführt ist; der Schlitz 44 ist also an seinem linken Ende geöffnet und weist an seinem rechten Ende einen nach oben gekrümmten Abschnitt auf.

Am ersten Schlitten 12 ist ein erstes Montageteil 46 angebracht, an dem wiederum das erste Deckelteil 7 angebracht ist. Am zweiten Schlitten 14 ist ein zweites Montageteil 48 angebracht, an dem das zweite Deckelteil 9 angebracht ist. Jedes Montageteil 46, 48 ist mit einem Führungsschlitz 50 bzw. 52 versehen, in den ein Führungsstift 54 bzw. 56 eingreift, der fest am ersten Schlitten 12 bzw. am zweiten Schlitten 14 angebracht ist. Jeder Führungsschlitz 50, 52 erstreckt sich ausgehend von seinem bezüglich der Figuren linken Ende zunächst über einen kurzen Abschnitt parallel zur Verschieberichtung der Mitnehmer in der Führungsschiene, dann schräg weg vom entsprechenden Deckelteil 7 bzw. 9 zur Führungsschiene hin und dann wieder zu seinem rechten Ende hin über einen kurzen Abschnitt parallel zur Verschieberichtung.

Jedes Montageteil 46, 48 ist mit dem entsprechenden Schlitten 12, 14 auch durch einen fest am entsprechenden Montageteil angebrachten Verstellbolzen 58 bzw. 60 verbunden. Jeder Verstellbolzen 58, 60 wirkt mit einer Schlittenkurvenfläche zusammen, die als Verstellschlitz 62 bzw. 64 im ersten Schlitten 12 bzw. im zweiten Schlitten 14 ausgeführt ist. Jeder Verstellschlitz ist gekrümmt ausgeführt und verläuft ausgehend von seinem bezüglich der Figuren linken Ende von den Deckelteilen weg nach unten. Die Verstellbolzen 58, 60 wirken weiterhin mit einer Verstellkurvenfläche 66 bzw. 68 zusammen, wobei die Verstellkurvenfläche 66, die mit dem im ersten Schlitten 12 geführten Verstellbolzen 58 zusammenwirkt, im zweiten Teil 10b der Führungsschiene angeordnet ist, während die Verstellkurvenfläche 68, die dem mit dem zweiten Schlitten 14 zusammenwirkenden Verstellbolzen 60 zugeordnet ist, im ersten Teil 10a der Führungsschiene 10 angeordnet ist. Dementsprechend steht der dem ersten Schlitten 12 zugeordnete Verstellbolzen 58 nicht über die in Figur 4 sichtbare Außenseite des ersten Schlittens 12 hinaus, sondern über dessen nicht sichtbare hintere Außenseite, während der Verstellbolzen 60 über die in Figur 4 sichtbare Außenseite des zweiten Schlittens 14 hervorsteht. Beide Verstellkurvenflächen bestehen aus einem geraden Abschnitt, der sich parallel zur Verschieberichtung der Mitnehmer in der Führungsschiene erstreckt, sowie einem von den Deckelteilen weg nach unten abgebogenen Endabschnitt am linken Ende der Verstellkurvenfläche. Jede Verstellkurvenfläche ist nach Art einer schlitzartigen Führungsbahn ausgeführt.

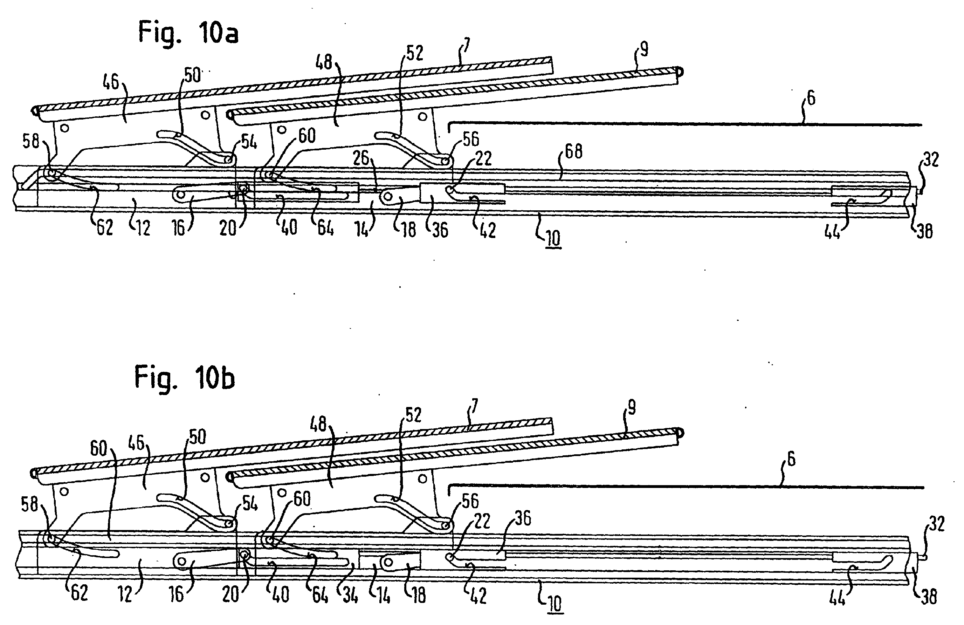

Nachfolgend wird erläutert, wie das bisher beschriebene Schiebedachmodul aus der in den Figuren 6a und 6b gezeigten geschlossenen Stellung in die geöffnete Stellung gebracht werden kann, die in den Figuren 10a und 10b gezeigt ist.

In den Figuren 6a und 6b ist das Schiebedachmodul in seiner geschlossenen Stellung gezeigt, in der die beiden Deckelteile 7, 9 die Dachöffnung im Fahrzeugdach 6 verschließen. In diesem Zustand befindet sich das Kabel 32 mit den Mitnehmern 34, 36, 38 in der bezüglich den Figuren am weitesten nach links geschobenen Stellung, also in Fahrtrichtung nach vorne geschoben. Das erste Deckelteil 7 ist in dieser Stellung verriegelt, da der Koppelbolzen 20 des ersten Riegels 16 in die ihm zugeordnete Aussparung 28 eingreift. Wie durch Vergleich der Riegel 16 und 18 zu sehen ist, befindet sich der Riegel 16 in einer nach unten verschwenkten Stellung; er erstreckt sich waagrecht. Der Koppelbolzen 20 kann aus der verriegelten Stellung nicht heraustreten, da er vom Schlitz 40 im ersten Mitnehmer 34 daran gehindert wird, sich nach oben zu verstellen.

Da der erste Schlitten 12 relativ zur Schiene arretiert ist, ist auch das Montageteil 46 in der gezeigten Stellung festgelegt. Der Verstellbolzen 58 ist nämlich ortsfest gehalten, und zwar auf den Schnittpunkt zwischen dem Verstellschlitz 62 im ersten Schlitten 12 und der Verstellkurvenfläche 66 in der Führungsschiene. Da der Verstellschlitz 62 im ersten Schlitten mittels des ersten Riegels 16 ortsfest relativ zur Führungsschiene arretiert ist, ist auch der Schnittpunkt zwischen der Verstellkurvenfläche in der Führungsschiene und dem Verstellschlitz 62 ortsfest, so daß der Verstellbolzen 58 festgelegt ist. Da das Montageteil 46 zusätzlich durch den Führungsstift 54 am ersten Schlitten 12 festgelegt ist, wird das Montageteil 46 und somit das erste Deckelteil 7 ortsfest gehalten.

Auf ähnliche Weise ist der zweite Schlitten 14 ortsfest gehalten. Der Verstellbolzen 60 befindet sich am linken Ende der Verstellkurvenfläche 68, so daß der zweite Schlitten 14 nicht nach links verstellt werden kann. Eine Verstellung des zweiten Schlittens 14 nach rechts ist ebenfalls nicht möglich, da der Koppelbolzen 22 des zweiten Riegels 18 am rechten Ende des Schlitzes 44 im dritten Mitnehmer 38 anliegt. Da der zweite Schlitten 14 relativ zur Schiene 10 arretiert ist, sind auch das zweite Montageteil 48 und das zweite Deckelteil 9 arretiert.

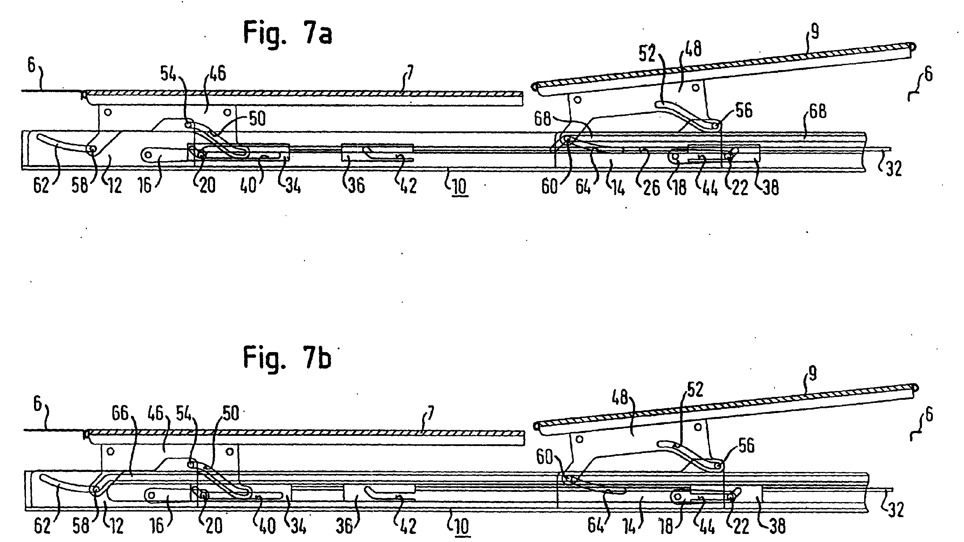

In den Figuren 7a und 7b ist das Schiebedachmodul in einem Zustand gezeigt, in welchem sich das zweite Deckelteil 9 in einer Lüfterstellung befindet. Diese Stellung wurde erreicht, indem das Kabel 32 gegenüber der in den Figuren 6a und 6b gezeigten Stellung nach rechts verschoben wurde, und zwar um die Länge des geradlinigen Abschnittes des Schlitzes 40 im ersten Mitnehmer 34.

Die Stellung und der Zustand des ersten Schlittens 12 sind unverändert. Der Koppelbolzen 20 befindet sich weiter in der Aussparung 28 der Führungsschiene, da der geradlinige Abschnitt des Schlitzes 40 des ersten Mitnehmers 34 verhindert, daß der Koppelbolzen 20 die Aussparung nach oben verläßt. Das erste Deckelteil 7 befindet sich somit weiterhin in seiner geschlossenen Stellung.

Der zweite Schlitten 14 ist gegenüber dem in den Figuren 6a und 6b gezeigten Zustand nach rechts verstellt, da er vom dritten Mitnehmer 38 nach rechts mitgenommen wurde. Diese Mitnahmebewegung wurde erzwungen, da der Koppelbolzen 22 sich im gekrümmten Abschnitt des Schlitzes 44 im dritten Mitnehmer 38 befindet. Bei einer Bewegung des dritten Mitnehmers 38 nach rechts wird der Koppelbolzen 22 zwar vom Schlitz 44 nach unten beaufschlagt. Da der Koppelbolzen 22 jedoch auf der Verriegelungskurvenfläche 26 aufliegt, kann er sich gegenüber der in den Figuren 6a und 6b gezeigten Stellung erst dann nach unten verstellen, wenn er in die Aussparung 30 in der Führungsschiene eintreten kann. Hieraus folgt, daß der dritte Mitnehmer 38 den Koppelbolzen 22 so lange zwangsweise mitnimmt, bis die Aussparung 30 erreicht ist. Dieser Zustand ist in den Figuren 7a und 7b gezeigt. Wie durch Vergleich mit den Figuren 6a und 6b zu sehen ist, befindet sich der zweite Riegel 18 nicht mehr in der angehobenen Stellung, sondern in der abgesenkten Stellung, in der er sich waagrecht erstreckt.

Die Verschiebung des zweiten Schlittens 14 relativ zur Führungsschiene zwingt den Verstellbolzen 60, der in den Verstellschlitz 64 im zweiten Schlitten eingreift, aus der in Figur 6a gezeigten Stellung am linken, unteren Ende der Verstellkurvenfläche 68 in die in Figur 7a gezeigte Stellung, in der sich der Verstellbolzen 60 am Übergang zwischen dem gekrümmten Endabschnitt der Verstellkurvenfläche 68 und dem geradlinigen Abschnitt befindet. Die Verschiebung des zweiten Schlittens zusammen mit dem Führungsstift 56 in dem Führungsschlitz 52 führt dazu, daß auch die rechte Seite des Montageteils 48 angehoben wird. Da der Hub auf der rechten Seite des Montageteils größer als auf der linken Seite ist, ergibt sich insgesamt sowohl eine translatorische Bewegung nach oben als auch eine rotatorische Bewegung entgegen dem Uhrzeigersinn. Das Ergebnis dieser beiden Bewegungen ist, daß sich das zweite Deckelteil 9 in der in den Figuren 7a und 7b gezeigten Lüfterstellung befindet. Diese Stellung ist stabil, da der zweite Schlitten 14 über den zweiten Riegel 18 und den Koppelbolzen 22 ortsfest relativ zur Führungsschiene gehalten wird. Der dritte Mitnehmer 38 verhindert nämlich, daß der Koppelbolzen 22 aus der Aussparung 30 austritt.

In den Figuren 8a und 8b ist das Schiebedachmodul in einem Zustand gezeigt, in dem sich zusätzlich zum zweiten Deckelteil 9 auch das erste Deckelteil 7 in der Lüfterstellung befindet. Dieser Zustand wurde erreicht. indem das Kabel 32 zusammen mit den Mitnehmern 34, 36, 38 weiter nach rechts verstellt wurde.

Zu Beginn der Verstellung des ersten Mitnehmers 34 nach rechts wird zunächst der Koppelbolzen 20 des ersten Riegels 16 vom gekrümmten linken Ende des Schlitzes 40 im ersten Mitnehmer 34 angehoben, so daß er die Aussparung 28 verläßt. Dann wird der erste Schlitten 12 über den ersten Riegel 16 und den Koppelbolzen 20, der am linken Ende des Schlitzes 40 im ersten Mitnehmer 34 anliegt, nach rechts verschoben. Bei dieser Verschiebung wird das erste Montageteil 46 in der vom zweiten Montageteil 48 bekannten Weise sowohl angehoben als auch entgegen dem Uhrzeigersinn verschwenkt, und zwar durch Zusammenwirken des Verstellbolzens 58 sowohl mit dem Verstellschlitz 62 im ersten Schlitten 12 als auch der Verstellkurvenfläche 66 in der Führungsschiene einerseits und Zusammenwirken des Führungsstiftes 54 mit dem Führungsschlitz 50 im ersten Montageteil 46 andererseits. Wie in den Figuren 8a, 8b zu sehen ist, ist der dritte Mitnehmer 38 nun vom zweiten Schlitten 14 abgekoppelt.

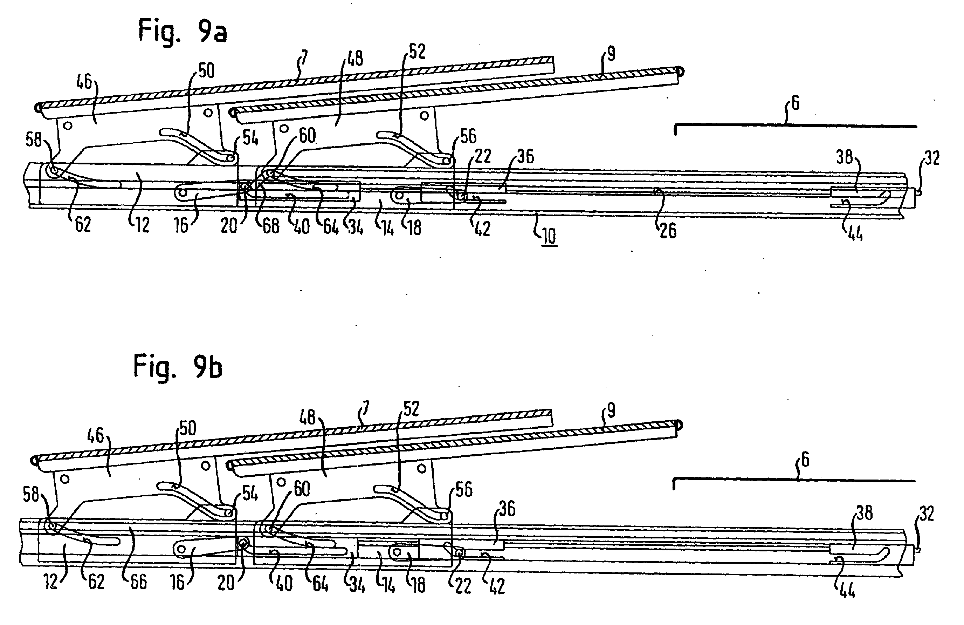

In den Figuren 9a und 9b ist das Schiebedachmodul in einer teilweise geöffneten Stellung gezeigt, in welcher das erste Deckelteil 7 auf das sich weiterhin in der Lüfterstellung befindende zweite Deckelteil 9 aufgeschoben ist. In dieser Stellung ist der vordere Abschnitt der Dachöffnung im Fahrzeugdach 6 freigegeben.

Der in den Figuren 9a und 9b gezeigte Zustand wird erreicht, indem das Kabel 32 weiter nach rechts gezogen wird. Dabei nimmt der erste Mitnehmer 34 den ersten Schlitten 12 über den ersten Riegel 16 und den Koppelbolzen 20 mit, der am linken Ende des Schlitzes 40 anliegt. Bei der Verstellbewegung des ersten Schlittens ändert sich die Stellung des ersten Montageteils 46 nicht, da der Verstellbolzen 58 parallel zur Verschieberichtung des ersten Schlittens 12 im geradlinigen Abschnitt der Verstellkurvenfläche 66 gleitet. Das erste Deckelteil 7 wird hin zum zweiten Deckelteil 9 gezogen, bis der zweite Mitnehmer 36 an den zweiten Schlitten 14 angekoppelt wird. Während des Ankoppelns wird der Schlitz 42 auf den Koppelbolzen 22 des zweiten Riegels 18 geschoben. Der Abstand zwischen dem ersten Mitnehmer 34 und dem zweiten Mitnehmer 36 ist dabei so gewählt, daß sich der Koppelbolzen 22 am Übergang vom geradlinigen Abschnitt des Schlitzes 42 zum nach oben gekrümmten Abschnitt dann befindet, wenn sich das erste Deckelteil 7 kurz vor dem zweiten Deckelteil 9 befindet. Dieser Zustand ist in den Figuren 9a und 9b gezeigt.

Wenn über diesen Zustand hinaus das Kabel 32 nach rechts gezogen wird, bewegt der gekrümmte Endabschnitt des Schlitzes 42 im zweiten Mitnehmer 36 den Koppelbolzen 32 nach oben, so daß der Koppelbolzen 32 die Aussparung 30 verläßt. Bei einer weiteren Verstellung des Kabels 32 nach rechts nehmen dann der erste Mitnehmer 34 und der zweite Mitnehmer 36 den ersten und den zweiten Schlitten 12, 14 nach rechts mit, da die Koppelbolzen 20, 22 jeweils am linken Ende des Schlitzes 40, 42 anliegen. Auf diese Weise können die beiden Deckelteile nach rechts verstellt werden, ohne aneinander anzuliegen, bis sie die vollständig geöffnete Stellung erreicht haben. Dieser Zustand ist in den Figuren 10a und 10b dargestellt.

Zum Schließen der beiden Deckelteile 7, 9 wird das Kabel 32 bezüglich der Figuren nach links in die Führungsschiene hineingeschoben. Dabei nehmen zunächst die beiden Mitnehmer 34, 36 die beiden Schlitten 12, 14 nach links mit, da die Koppelbolzen 20, 22 durch Anlage an der entsprechenden Verriegelungskurvenfläche 24 bzw. 26 gehindert sind, in Schlitz 40 bzw. 42 nach unten auszuweichen. Dies ist erst dann möglich, wenn das zweite Deckelteil 9 die in den Figuren 9a und 9b gezeigte Stellung und das erste Deckelteil 7 die in den Figuren 7a und 7b gezeigte Stellung erreicht hat. In der in den Figuren 9a und 9b gezeigten Stellung wird der zweite Mitnehmer 36 vom zweiten Schlitten 14 abgekoppelt, und in der in den Figuren 7a und 7b gezeigten Stellung wird der dritte Mitnehmer 38 an den zweiten Schlitten 14 angekoppelt. Gegen Ende der Verstellung des Kabels wird wieder der in den Figuren 6a und 6b gezeigte, geschlossene Zustand erreicht.

### Bezugszeichenliste:

- 5:: Schiebedachmodul
- 6:: Fahrzeugdach
- 7:: erstes Deckelteil
- 9:: zweites Deckelteil
- 10:: Führungsschiene
- 12:: erster Schlitten
- 14:: zweiter Schlitten
- 16:: erster Riegel
- 18:: zweiter Riegel
- 20:: Koppelbolzen
- 22:: Koppelbolzen
- 24:: Verriegelungskurvenfläche
- 26:: Verriegelungskurvenfläche
- 28:: Aussparung
- 30:: Aussparung
- 32:: Kabel
- 34:: erster Mitnehmer
- 36:: zweiter Mitnehmer
- 38:: dritter Mitnehmer
- 40:: Schlitz
- 42:: Schlitz
- 44:: Schlitz
- 46:: erstes Montageteil
- 48:: zweites Montageteil
- 50:: Führungsschlitz
- 52:: Führungsschlitz
- 54:: Führungsstift
- 56:: Führungsstift
- 58:: Verstellbolzen
- 60:: Verstellbolzen
- 62:: Verstellschlitz
- 64:: Verstellschlitz
- 66:: Verstellkurvenfläche
- 68:: Verstellkurvenfläche

## Patentansprüche

1. Modul, insbesondere Schiebedachmodul für ein Fahrzeug, mit mindestens einer Führung (10), mindestens zwei Schlitten (12, 14), die in der Führung verschiebbar sind und an denen jeweils ein zu betätigendes Bauteil (7, 9) angebracht ist, und mindestens einem ersten Mitnehmer (36) und einem zweiten Mitnehmer (38), die beide mit einem einzigen Antriebsmittel (32) verbunden sind, so daß sie in der Führung verstellt werden können, wobei der erste Mitnehmer (36) und mindestens einer der Schlitten (14) so ausgebildet sind, daß der Mitnehmer (36) an dem einen Schlitten (14) angekoppelt werden und ihn verstellen kann und nach einer vorbestimmten Verstellung des Schlittens (14) wieder von diesem gelöst werden kann, und wobei der zweite Mitnehmer (38) so ausgebildet ist, daß er an dem einen Schlitten (14) oder einem anderen Schlitten angekoppelt werden und ihn verstellen kann und wieder von diesem abgekoppelt werden kann.

2. Modul nach Anspruch 1, **dadurch gekennzeichnet, daß** jeder der Mitnehmer (36, 38) eine Koppelkurvenfläche (42, 44) aufweipt, die mit einem Koppelelement (20, 22) zusammenwirken kann, das mit dem entsprechenden Schlitten (12, 14) verbunden ist.

3. Modul nach Anspruch 2, **dadurch gekennzeichnet, daß** die Koppelkurvenfläche durch einen gekrümmten Schlitz (42, 44) im Mitnehmer (36, 38) gebildet ist.

4. Modul nach einem der Ansprüche 2 und 3, **dadurch gekennzeichnet, daß** das Koppelelement ein Koppelbolzen (20, 22) ist, der an einem Ende eines Riegels (16, 18) angebracht ist, wobei das andere Ende des Riegels (16, 18) verstellbar an dem Schlitten (12, 14) angebracht ist.

5. Modul nach Anspruch 4, **dadurch gekennzeichnet, daß** der Koppelbolzen (20, 22) mit einer Verriegelungskurvenfläche (24, 26) zusammenwirken kann, die an der Führung (10) angebracht ist.

6. Modul nach einem der Ansprüche 4 und 5, **dadurch gekennzeichnet, daß** die Führung (10) mit einer Aussparung (28, 30) zur Arretierung des Riegels (16, 18) versehen ist.

7. Modul nach Anspruch 6, **dadurch gekennzeichnet, daß** der Koppelbolzen (20, 22) in die Aussparung (28, 30) eingreifen kann, um den Riegel (16, 18) und damit den Schlitten (12, 14) relativ zur Führung (10) zu arretieren.

8. Modul nach einem der vorhergehenden Ansprüche, **dadurch gekennzeichnet, daß** am Schlitten (12, 14) ein Montageteil (46, 48) angebracht ist, das mit mindestens einer Verstellkurvenfläche (66, 68) in der Führung (10) zusammenwirkt.

9. Modul nach Anspruch 8, **dadurch gekennzeichnet, daß** das Montageteil einen Führungsschlitz (50, 52) aufweist, in den ein Führungsstift (54, 56) eingreift, der am Schlitten (12, 14) befestigt ist, und einen Verstellbolzen (58, 60), der mit der Verstellkurvenfläche (66, 68) zusammenwirken kann.

10. Modul nach Anspruch 9, **dadurch gekennzeichnet, daß** der Verstellbolzen (58, 60) mit einer Schlittenkurvenfläche (62, 64) zusammenwirkt, die im Schlitten ausgebildet ist.

11. Modul nach einem der vorhergehenden Ansprüche, **dadurch gekennzeichnet, daß** das Antriebsmittel ein schubfestes Kabel (32) ist.

12. Modul nach Anspruch 11, **dadurch gekennzeichnet, daß** die Mitnehmer (36, 38) fest an dem Kabel angebrachte sind.

13. Modul nach einem der vorhergehenden Ansprüche, **dadurch gekennzeichnet, daß** drei Mitnehmer (34, 36, 38) vorgesehen sind, die in vorbestimmten Abständen fest auf dem Antriebsmittel (32) angebracht sind, wobei an den beiden Schlitten (12, 14) zwei Deckelteile (7, 9) eines zweiteiligen Schiebedachdeckels angebracht sind, die jeweils aus einer geschlossenen Stellung über eine Lüfterstellung in eine geöffnete Stellung gebracht werden können.

## Claims

1. A module, in particular a sliding roof module for a motor vehicle, comprising at least one guide (10), at least two carriages (12, 14) which are adapted to be moved in the guide and to which one component (7, 9) each is attached which is a component that is to be operated, and comprising at least a first catch (36) and a second catch (38) which both are connected to a single drive device (32) so that they can be shifted in the guide, the first catch (36) and at least one of the carriages (14) being designed such that the catch (36) can be coupled with the one carriage (14) and is able to shift it and, after a predetermined shifting of the carriage (14), can be detached from it again, and the second catch (38) being designed such that it can be coupled with the one carriage (14) or with another carriage and is able to shift it and can be decoupled from it again.

2. The module according to claim 1, **characterised in that** each of the catches (36, 38) has a coupling cam surface (42, 44) which can cooperate with a coupling element (20, 22), the latter being connected with the corresponding carriage (12, 14).

3. The module according to claim 2, **characterised in that** the coupling cam surface is formed by a curved slot (42, 44) in the catch (36, 38).

4. The module according to any of the claims 2 and 3, **characterised in that** the coupling element is a coupling bolt (20, 22) which is attached to one end of a bar (16, 18), the other end of the bar (16, 18) being attached to the carriage (12, 14) so as to be shiftable.

5. The module according to claim 4, **characterised in that** the coupling bolt (20, 22) is adapted to cooperate with a locking cam surface (24, 26) which is attached to the guide (10).

6. The module according to any of the claims 4 and 5, **characterised in that** the guide (10) is provided with a recess (28, 30) for arresting the bar (16, 18).

7. The module according to claim 6, **characterised in that** the coupling bolt (20, 22) can engage into the recess (28, 30) in order to arrest the bar (16, 18) and, hence, to arrest the carriage (12, 14) relative to the guide (10).

8. The module according to any of the preceding claims, **characterised in that** a mounting part (46, 48) is provided on the carriage (12, 14), the mounting part cooperating with at least one shift cam surface (66, 68) in the guide (10).

9. The module according to claim 8, **characterised in that** the mounting part has a guide slot (50, 52) into which a guide pin (54, 56) engages, the guide pin being fixed to the carriage (12, 14), and has a shift bolt (58, 60) which is adapted to cooperate with the shift cam surface (66, 68).

10. The module according to claim 9, **characterised in that** the shift bolt (58, 60) cooperates with a carriage cam surface (62, 64) which is formed in the carriage.

11. The module according to any of the preceding claims, **characterised in that** the drive device is a non-buckling cable (32).

12. The module according to claim 11, **characterised in that** the catches (36, 38) are fixedly attached to the cable.

13. The module according to any of the preceding claims, **characterised in that** three catches (34, 36, 38) are provided which are fixedly attached to the drive device (32) at predetermined distances, two cover pieces (7, 9) of a two-piece sliding roof cover being attached to the two carriages (12, 14), each of the cover pieces being adapted to be brought from a closed position via a ventilation position into an open position.

## Revendications

1. Module, en particulier module de toit ouvrant pour un véhicule, comportant au moins un guidage (10), au moins deux chariots (12, 14) qui peuvent être déplacés dans le guidage et sur chacun desquels est monté un composant (7, 9) à actionner, et au moins un premier toc d'entraînement (36) et un deuxième toc d'entraînement (38) qui sont tous les deux reliés à un seul moyen d'entraînement (32), de telle sorte qu'ils peuvent être déplacés dans le guidage, le premier toc d'entraînement (36) et au moins un des chariots (14) étant réalisés de telle sorte que le toc d'entraînement (36) peut être accouplé audit un chariot (14) et le déplacer et, après un déplacement prédéterminé du chariot (14), être de nouveau détaché de celui-ci, et le deuxième toc d'entraînement (38) étant réalisé de telle sorte qu'il peut être accouplé audit un chariot (14) ou à un autre chariot et le déplacer et être de nouveau détaché de celui-ci.

2. Module selon la revendication 1, **caractérisé en ce que** chacun des tocs d'entraînement (36, 38) présente une surface de came (42, 44) qui peut coopérer avec un élément d'accouplement (20, 22) qui est relié au chariot (12, 14) correspondant.

3. Module selon la revendication 2, **caractérisé en ce que** la surface de came (42, 44) est formée par une fente (42, 44) curviligne (42, 44) dans le toc d'entraînement (36, 38).

4. Module selon l'une des revendications 2 et 3, **caractérisé en ce que** l'élément d'accouplement est un boulon d'accouplement (20, 22) qui est monté à une extrémité d'une barre (16, 18), l'autre extrémité de la barre (16, 18) étant montée mobile sur le chariot (12, 14).

5. Module selon la revendication 4, **caractérisé en ce que** le boulon d'accouplement (20, 22) peut coopérer avec une surface de came de verrouillage (24, 26) qui est montée sur le guidage (10).

6. Module selon l'une des revendications 4 et 5, **caractérisé en ce que** le guidage (10) est pourvu d'un évidement (28, 30) pour bloquer la barre (16, 18).

7. Module selon la revendication 6, **caractérisé en ce que** le boulon d'accouplement (20, 22) peut s'engager dans l'évidement (28, 30) pour bloquer la barre (16, 18) et par conséquent le chariot (12, 14) par rapport au guidage (10).

8. Module selon l'une des revendications précédentes, **caractérisé en ce que** sur le chariot (12, 14) est montée une partie de montage (46, 48) qui coopère avec au moins une surface de came de déplacement (66, 68) dans le guidage (10).

9. Module selon la revendication 8, **caractérisé en ce que** la partie de montage présente une fente de guidage (50, 52) dans laquelle s'engage une goupille de guidage (54, 56) qui est fixée sur le chariot (12, 14) et un boulon de déplacement (58, 60) qui peut coopérer avec la surface de came de déplacement (66, 68).

10. Module selon la revendication 9, **caractérisé en ce que** le boulon de déplacement (58, 60) coopère avec une surface de came de chariot (62, 64) qui est réalisée sur le chariot.

11. Module selon l'une des revendications précédentes, **caractérisé en ce que** le moyen d'entraînement est un câble (32) résistant à la poussée.

12. Module selon la revendication 11, **caractérisé en ce que** les tocs d'entraînement (36, 38) sont montés de manière fixe sur le câble.

13. Module selon l'une des revendications précédentes, **caractérisé en ce qu'**il est prévu trois tocs d'entraînement (34, 356, 38) qui sont montés de manière solidaire sur le moyen d'entraînement (32) à des distances prédéterminées, deux parties de couvercle (7, 9) d'un couvercle de toit ouvrant étant montées sur les deux chariots (12, 14), lesquelles parties de couvercle peuvent être amenées chacune depuis une position fermée via une position d'aération jusque dans une position ouverte.
